# EUROPEAN PATENT APPLICATION

(11) **EP 4 848 207 A1**
(43) Date of publication of application: **02.12.2026**
(21) Application number: 26180149.2
(22) Date of filing: 21.05.2026
(51) Int. Cl.: G06T 7/33, G06T 17/20, G06T 19/20

(54) **METHOD AND APPARATUS FOR 3D ELECTROPHYSIOLOGICAL SURFACE MAP REGISTRATION AND ATTRIBUTE TRANSFER BASED ON SPHERICAL DOMAIN NORMALIZATION AND OPTIMAL TRANSPORT FOR LANDMARK-INDEPENDENT CORRESPONDENCE ESTIMATION**

(30) Priority: 27.05.2025 KR 20250069088; 08.04.2026 KR 20260063832
(71) Applicant: INDUSTRY-ACADEMIC COOPERATION FOUNDATION, YONSEI UNIVERSITY, Seoul 03722 (KR)
(72) Inventor: PARK, Hui Nam, 07340 Seoul (KR); KWON, Oh Seok, Goyang-si (KR)
(74) Representative: Caspary, Karsten

(57) **Abstract**

3D The present disclosure relates to a 3D surface data processing technology, and more particularly, to a technology that normalizes a 3D surface map including electrophysiological attribute values acquired from a cardiac surface into a spherical domain, then registers the shapes between different surface maps using anchor-based registration and optimal transport, and decodes attribute values from a texture corresponding to the registered coordinates to transfer electrophysiological attributes.

## Description

### BACKGROUND OF THE INVENTION

### Field of the Invention

The present disclosure relates to a 3D surface data processing technology, and more particularly, to a technology that normalizes a 3D surface map including electrophysiological attribute values acquired from a cardiac surface into a spherical domain, then registers the shapes between different surface maps using anchor-based registration and optimal transport, and decodes attribute values from a texture corresponding to the registered coordinates to transfer electrophysiological attributes.

### Background of the Related Art

In the cardiac electrophysiological analysis or process, a technology of comparing and interpreting electrical characteristics between cardiac surfaces acquired or deformed at different time points on the same reference coordinate system is required. For example, surface attributes such as voltage or local activity time play an important role in the diagnosis of diseases or the planning of treatment, and for this purpose, registration and attribute correspondence between different 3D surface maps must be performed. This technology is of greater importance in that it goes beyond simple shape alignment and aims to consistently correspond to attribute values that have physical meaning on the surface.

Various methods have been utilized for such surface registration in the past. In general, landmark-based registration methods in which experts directly specify corresponding points have been widely used, and geometry-based registration techniques such as nearest point iterative registration have been applied as an approach for automation. In addition, since a correspondence between surfaces has been formed, a method of transferring attribute values using a nearest relationship between each vertex or interpolating by utilizing local geometric information of a triangular network has been utilized.

However, these existing technologies have several limitations. First, the landmark-based method relies on manual work by experts, thus making it difficult to automate, and resulting in varying outcomes depending on the user. In addition, while the nearest point iterative registration method may be effective when the overall shape is similar, it is difficult to form a stable correspondence relationship when local deformation or non-rigid deformation is present. Furthermore, when attributes are transferred based on simple nearest points, a consistent correspondence relationship between vertices is not guaranteed, which may lead to distortion or spreading of attribute values.

In particular, for cardiac electrophysiological surface maps, it is very difficult to define direct correspondences between vertices due to the influence of imaging conditions, mesh generation methods, local deformation, and noise, even when targeting the same anatomical structure. For this reason, it is difficult to compare attributes with actual meaning using only simple shape registration, and a technology that simultaneously satisfies a consistent correspondence between shapes and attributes is required. Existing technologies tend to treat shape registration and attribute transfer as separate issues, showing limitations in satisfying both elements simultaneously.

Therefore, in order to solve these problems, a new registration technology that can be automated and computationally stable is required while comprehensively considering surface shape registration and attribute transition. Technology that meets these requirements is highly necessary in that it overcomes existing limitations such as reliance on manual work, computational complexity, and response instability, and enables more accurate and consistent electrophysiological analysis.

### CITATION LIST

### Patent Literature

Korean Patent No. 10-1558246

### SUMMARY OF THE INVENTION

In order solve the foregoing problems, an aspect of the present disclosure is to provide a method for registration and attribute transition that can stably register 3D electrophysiological surface maps acquired at different time points or conditions in a common reference space, and consistently integrate electrical attribute information included in that surface without distortion. Specifically, an aspect of the present disclosure is to provide a technology that enables comparison by normalizing surface maps with various shapes and resolutions into a common domain, simultaneously secures computational efficiency and registration accuracy by efficiently extending a correspondence relationship between all vertices based on a small number of representative points, and allows for conservative transitions between vertices without discontinuity or distortion by representing and restoring surface attribute values in a continuous form. In addition, an aspect of the present disclosure is to provide an integrated processing structure that enables quantitative comparison and analysis between various data by accumulating or integrating attribute information acquired from a plurality of surface maps onto a single reference surface based on the registration result.

Meanwhile, technical problems of the present disclosure are not limited to the above-mentioned problems, and other technical problems which are not mentioned herein will be clearly understood by those skilled in the art from the description below.

A method of performing 3D electrophysiological surface map registration and attribute transfer operated by a processor according to one embodiment may include the operations of acquiring a reference map to serve as a reference for registration as a surface map including mesh information of a cardiac surface and electrophysiological attribute values corresponding to vertices of the mesh information and a target map to be registered with the reference map; transforming each vertex of the reference map and the target map into spherical coordinates and UV coordinates, and encoding the electrophysiological attribute values in the form of a texture on the UV coordinates corresponding thereto; extracting a set of representative points consisting of vertices separated by a predetermined distance interval from among the spherical coordinates of the reference map and the target map, respectively, and determining a preset number of anchor points based on a method of selecting a mutual distance from each other to be maximized from among the set of representative points; determining a one-to-one correspondence between anchor points of the reference map and the target map by registering the target map with the reference map so as to allow an entropy normalized optimal transport cost between the anchor points of the reference map and the target map to be minimized; generating final spherical coordinates of the target map by interpolating the coordinates for each vertex of the target map based on a degree of transformation by the registration of a predetermined number of adjacent anchor points for each vertex of the target map; sampling and then decoding the encoded texture at a position of the UV coordinates of the reference map corresponding to the final spherical coordinates to transfer electrophysiological attribute values for the final spherical coordinates; and generating a target map that has been registered by assigning the transferred electrophysiological attribute values to the final spherical coordinates of the target map.

Furthermore, the acquiring may include a preprocessing operation that performs mesh decimation to reduce a number of vertices constituting mesh information of each of the acquired reference map and target map to a preset target number of vertices.

Furthermore, the encoding may include normalizing each vertex of the reference map and the target map into spherical coordinates on a common spherical domain, and generating UV coordinates corresponding to the normalized spherical coordinates; and normalizing the electrophysiological attribute values to encode the normalized electrophysiological attribute values in the form of a texture on UV coordinates corresponding to the vertices of the reference map and the target map, respectively.

Furthermore, the extracting of a set of representative points may include extracting a vertex corresponding to coordinates separated by a predetermined distance interval from among the spherical coordinates included in the reference map and the target map, respectively, as the representative point based on a Poisson disk sampling technique.

Furthermore, the extracting of a set of representative points may include aligning the target map by performing a scale transformation, rotation transformation, or translation transformation based on the reference map to eliminate global positional differences between the reference map and the target map.

Furthermore, the aligning may include performing Procrustes alignment including scale transformation, rotation transformation, and translation transformation so as to allow an error between representative points of the reference map and the target map to be minimized based on an objective function of Equation 1 below. [Equation 1] ${min}_{s , R , t} {\sum }_{i = 1}^{N} {\left‖{y}_{i}-\left({sRx}_{i}+t\right)\right‖}_{2}^{2}$

(s: scale transformation, R: rotation transformation, t: translation transformation, *xᵢ*: a representative point of a target map, *yᵢ*: a representative point of a reference map, N is a number of representative points, i is an index specifying representative points)

Furthermore, the extracting of anchor points may include extracting a preset number of anchor points by sequentially selecting a mutual distance from each other to be maximized from among a set of representative points extracted from the reference map and the target map, respectively, based on a farthest point sampling technique.

Furthermore, the determining of a one-to-one correspondence may include registering the target map with the reference map to allow an entropy normalized optimal transport cost between the anchor points of the reference map and the target map to be minimized so as to calculate a correspondence relationship between sets of anchor points of the reference map and the target map; and determining, subsequent to the registration, a one-to-one correspondence between anchor points of the reference map and the target map by performing allocation optimization so as to allow a distance cost between anchor points of the reference map and the target map to be minimized.

Furthermore, the entropy normalized optimal transport cost is set based on Equations 2 and 3 below. [Equation 2] ${min}_{P ∈ Π} {\sum }_{i , j} {P}_{ij} c \left(\hat{{x}_{ι}}, {y}_{j}\right) + ϵ {\sum }_{i , j} {P}_{ij} {logP}_{ij}$

(*x̂ᵢ*: an i-th anchor point of a transformed target map, *yⱼ*: a j-th anchor point of a reference map, *c*(*x̂ᵢ,yⱼ*): a distance loss between two anchor points, *Pᵢⱼ*: a value representing a degree of correspondence between an anchor point *x̂ᵢ* of a target map and an anchor point *yⱼ* of a reference map, *P*: a matrix representing a correspondence relationship between anchor points of a reference map and a target map, Π: Equation 3 below as a set of possible *P, ε* is an entropy normalized strength) [Equation 3] $Π = \left\{P∈{ℝ}_{+}^{M \times M}\left|{\sum }_{j} {P}_{ij} = \frac{1}{M} , {\sum }_{i} {P}_{ij} = \frac{1}{M}\right.\right.$

(*P*: a matrix representing a correspondence relationship between anchor points of a reference map and a target map, Π: a set of possible *P, Pᵢⱼ*: a value representing a degree of correspondence between an anchor point *x̂ᵢ* of a target map and an anchor point *yⱼ* of a reference map, M is a number of anchor points in a reference map and a target map, respectively)

Furthermore, the allocation optimization is performed by determining a one-to-one correspondence between anchor points of the reference map and the target map that is minimized based on Equation 4 below. [Equation 4] ${min}_{Π ∈ P} {\sum }_{i , j} {Π}_{ij} {C}_{ij}$

*(P:* a matrix representing a correspondence relationship between anchor points of a reference map and a target map, Π: a set of possible *P,* Π*ᵢⱼ*: an element representing whether there is a correspondence between an i-th anchor point of a target map and a j-th anchor point of a reference map, *Cᵢⱼ*: Equation 5 as a distance cost between anchor points) [Equation 5] ${C}_{ij} = {\left‖\hat{{x}_{ι}}-{y}_{j}\right‖}_{2}$

(Cᵢⱼ: a distance cost between anchor points, *x̂ᵢ*: an i-th anchor point of a transformed target map, *yⱼ*: a j-th anchor point of a reference map)

Furthermore, the generating of final spherical coordinates may include interpolating the coordinates of each vertex of the target map in an inverse distance weighting manner based on a degree of transformation by the registration of k adjacent neighboring anchor points for vertex z of the target map, based on Equation 6 below. [Equation 6] ${Z}^{˜} * = \frac{{\sum }_{m = 1}^{k} {w}_{m} \left(z\right) {a}_{m}^{*}}{{\left‖{\sum }_{m = 1}^{k} {w}_{m} \left(z\right) {a}_{m}^{*}\right‖}_{2}}$

(*z̃**: vertex coordinates of an interpolated target map, z: vertex coordinates of a target map before interpolation, k: k adjacent neighboring anchor points for vertex z, m: an index specifying neighboring anchor points, ${a}_{m}^{∗}$: coordinates of neighboring anchor points where registration is performed, wₘ(*z*): Equation 7 below as a function of determining the influence of an m-th neighboring anchor point to be reflected in vertex z) [Equation 7] ${w}_{m} \left(z\right) = \frac{1 / max \left({d}_{m}\left(z\right),ϵ\right)}{{\sum }_{n = 1}^{k} 1 / max \left({d}_{n}\left(z\right),ϵ\right)}$

(wₘ(*z*): a function of determining the influence of an m-th neighboring anchor point to be reflected in vertex z, *dₘ*(*z*): a distance between vertex z and an m-th neighboring anchor point, *dₙ*(*z*): a distance between vertex z and an n-th neighboring anchor point, *ε*: a real number of a preset value, k: k adjacent neighboring anchor points for vertex z, m: an index specifying an m-th neighboring anchor point, n: an index specifying the remaining neighboring anchor points excluding an m-th neighboring anchor point)

Furthermore, the transferring of electrophysiological attribute values may include sampling and then decoding the encoded texture at a position of the UV coordinates of the reference map corresponding to the final spherical coordinates to generate electrophysiological attribute values based on Equation 8 below. [Equation 8] ${a}_{i}^{t ← r} = DecodeRGB \left({T}^{\left(r\right)}\left({u}_{i}^{∗}, {v}_{i}^{∗}\right)\right)$

( ${a}_{i}^{t ← r}$: an electrophysiological attribute value of an i-th vertex transferred from a reference map to a target map, *DecodeRGB*: a function of restoring RGB information of a texture into electrophysiological attribute values, $\left({u}_{i}^{*}, {v}_{i}^{*}\right)$: is UV coordinates of a reference map corresponding to final spherical coordinates for an i-th vertex, *T*^{(*r*)}: texture information encoded in UV coordinates $\left({u}_{i}^{*}, {v}_{i}^{*}\right)$ of a reference map)

Furthermore, the generating of a target map that has been registered may include generating an integrated attribute value by accumulating a plurality of electrophysiological attribute value vectors transferred from the plurality of target maps that has been registered to a reference map based on Equation 9 below. [Equation 9] ${f}^{i} = {\sum }_{l = 1}^{L} {{f}_{i}}^{\left(l\right)}$

(*fⁱ*: an integrated attribute value, ${{f}_{i}}^{\left(l\right)}$: an electrophysiological attribute value of an i-th vertex transferred from an l-th target map, *L*: a number of target maps to be integrated, l: an index specifying a target map)

One example of an apparatus may include a memory comprising an instruction; and a processor that performs a predetermined operation based on the instruction, wherein the operation of the processor comprises the operations of acquiring a reference map to serve as a reference for registration as a surface map including mesh information of a cardiac surface and electrophysiological attribute values corresponding to vertices of the mesh information and a target map to be registered with the reference map; transforming each vertex of the reference map and the target map into spherical coordinates and UV coordinates, and encoding the electrophysiological attribute values in the form of a texture on the UV coordinates corresponding thereto; extracting a set of representative points consisting of vertices separated by a predetermined distance interval from among the spherical coordinates of the reference map and the target map, respectively, and determining a preset number of anchor points based on a method of selecting a mutual distance from each other to be maximized from among the set of representative points; determining a one-to-one correspondence between anchor points of the reference map and the target map by registering the target map with the reference map so as to allow an entropy normalized optimal transport cost between the anchor points of the reference map and the target map to be minimized; generating final spherical coordinates of the target map by interpolating the coordinates for each vertex of the target map based on a degree of transformation by the registration of a predetermined number of adjacent anchor points for each vertex of the target map; sampling and then decoding the encoded texture at a position of the UV coordinates of the reference map corresponding to the final spherical coordinates to transfer electrophysiological attribute values for the final spherical coordinates; and generating a target map that has been registered by assigning the transferred electrophysiological attribute values to the final spherical coordinates of the target map.

One example of a computer program stored on a computer-readable recording medium may include, when performed on at least one processor, an instruction that allows the processor to perform the operations of acquiring a reference map to serve as a reference for registration as a surface map including mesh information of a cardiac surface and electrophysiological attribute values corresponding to vertices of the mesh information and a target map to be registered with the reference map; transforming each vertex of the reference map and the target map into spherical coordinates and UV coordinates, and encoding the electrophysiological attribute values in the form of a texture on the UV coordinates corresponding thereto; extracting a set of representative points consisting of vertices separated by a predetermined distance interval from among the spherical coordinates of the reference map and the target map, respectively, and determining a preset number of anchor points based on a method of selecting a mutual distance from each other to be maximized from among the set of representative points; determining a one-to-one correspondence between anchor points of the reference map and the target map by registering the target map with the reference map so as to allow an entropy normalized optimal transport cost between the anchor points of the reference map and the target map to be minimized; generating final spherical coordinates of the target map by interpolating the coordinates for each vertex of the target map based on a degree of transformation by the registration of a predetermined number of adjacent anchor points for each vertex of the target map; sampling and then decoding the encoded texture at a position of the UV coordinates of the reference map corresponding to the final spherical coordinates to transfer electrophysiological attribute values for the final spherical coordinates; and generating a target map that has been registered by assigning the transferred electrophysiological attribute values to the final spherical coordinates of the target map.

One example of computer-readable recording medium on which a program is recorded may include, when performed on at least one processor, an instruction that allows the processor to perform the operations of acquiring a reference map to serve as a reference for registration as a surface map including mesh information of a cardiac surface and electrophysiological attribute values corresponding to vertices of the mesh information and a target map to be registered with the reference map; transforming each vertex of the reference map and the target map into spherical coordinates and UV coordinates, and encoding the electrophysiological attribute values in the form of a texture on the UV coordinates corresponding thereto; extracting a set of representative points consisting of vertices separated by a predetermined distance interval from among the spherical coordinates of the reference map and the target map, respectively, and determining a preset number of anchor points based on a method of selecting a mutual distance from each other to be maximized from among the set of representative points; determining a one-to-one correspondence between anchor points of the reference map and the target map by registering the target map with the reference map so as to allow an entropy normalized optimal transport cost between the anchor points of the reference map and the target map to be minimized; generating final spherical coordinates of the target map by interpolating the coordinates for each vertex of the target map based on a degree of transformation by the registration of a predetermined number of adjacent anchor points for each vertex of the target map; sampling and then decoding the encoded texture at a position of the UV coordinates of the reference map corresponding to the final spherical coordinates to transfer electrophysiological attribute values for the final spherical coordinates; and generating a target map that has been registered by assigning the transferred electrophysiological attribute values to the final spherical coordinates of the target map.

According to the present disclosure, registration may be performed by using anchor-based optimal transport after normalizing a 3D electrophysiological surface map into a common spherical domain, thereby forming a stable and consistent correspondence relationship between surfaces having different shapes and resolutions. Accordingly, a problem of unstable registration caused by local deformation or differences in mesh quality, as in the past, may be alleviated, and all vertex correspondences may be extended based on a small number of representative anchors, thereby securing global shape registration accuracy while maintaining computational efficiency.

In addition, through a structure that encodes surface attribute values into a texture form and restores them at corresponding coordinates, it reduces distortion or discontinuity that can occur during the attribute transfer process, thereby having an effect of enabling the preservation of continuous attributes. Furthermore, attribute information acquired from a plurality of surface maps may be integrated onto a single reference surface to provide a foundation for quantitatively comparing and analyzing electrophysiological information between various time points or objects, and an overall automated registration and attribute integration pipeline may be implemented, thereby having an effect of simultaneously improving analysis efficiency and reliability.

Meanwhile, the effects of the present disclosure may not be limited to the above-mentioned effects, and other technical effects which are not mentioned herein will be clearly understood by those skilled in the art from the description below.

### BRIEF DESCRIPTION OF THE DRAWINGS

FIG. 1 is a configuration diagram of 3D electrophysiological surface map registration and attribute transfer according to one embodiment.
FIG. 2 is a flowchart showing steps of an operation performed by 3D electrophysiological surface map registration and attribute transfer according to one embodiment.
FIGS. 3 and 4 are conceptual diagrams showing a flow of data processed in accordance with the operation of FIG. 2 by 3D electrophysiological surface map registration and attribute transfer according to one embodiment.
FIGS. 5 to 7 are results of evaluating a registration between a reference map and a target map, which has been registered by applying the present disclosure in terms of two aspects, a shape error and an attribute restoration error.
FIGS. 8 to 10 are results of evaluating a registration between a reference map and a target map, which has been registered by applying the present disclosure, based on attribute transfer performance.
FIGS. 11 to 15 are drawings showing results of electrophysiological attribute transfer using arrhythmia patient data to which the present disclosure is applied.

### DETAILED DESCRIPTION OF THE PREFERRED EMBODIMENT

The details of the objectives and technical configurations of the present disclosure and operational effects thereof will be more clearly understood from the following detailed description based on the accompanying drawings appended hereto. Hereinafter, embodiments according to the present disclosure will be described in detail with reference to the accompanying drawings.

Embodiments disclosed herein should not be interpreted as limiting or used to limit the scope of the present disclosure. It is apparent for those skilled in the art that a description including embodiments herein has various applications. Therefore, any embodiments described in the detailed description of the present disclosure are illustrative for better understanding of the present disclosure and are not intended to limit the scope of the present disclosure to the embodiments.

Functional blocks illustrated in the drawings and described hereunder are only examples of possible implementations. In other implementations, other functional blocks may be used without departing from the concept and scope of the detailed description. Furthermore, one or more functional blocks of the present disclosure are illustrated as separate blocks, but one or more of the functional blocks of the present disclosure may be a combination of various hardware and software elements that execute the same function.

In addition, an expression that some elements are "included" is an expression of an "open type", and the expression simply denotes that the corresponding elements are present, but should not be construed as excluding additional elements.

Moreover, in case where it is mentioned that one element is "connected" or "coupled" to the other element, it should be understood that one element may be directly connected to the other element, but another element may be present therebetween.

Hereinafter, various embodiments of the present disclosure will be described with reference to the accompanying drawings. However, it should be understood that the embodiments are not intended to limit the present disclosure to specific embodiments, and include various modifications, equivalents, and/or alternatives of the embodiments of the present disclosure.

The present disclosure proposes a 3D electrophysiological surface map registration and attribute transfer apparatus 100 for implementing a technology that normalizes a 3D surface map including electrophysiological attribute values acquired from a cardiac surface into a spherical domain, then registers the shapes between different surface maps using anchor-based registration and optimal transport, and decodes attribute values from a texture corresponding to the registered coordinates to transfer electrophysiological attributes.

Hereinafter, a configuration of the 3D electrophysiological surface map registration and attribute transfer apparatus 100 of the present disclosure and an operation of each component will be described.

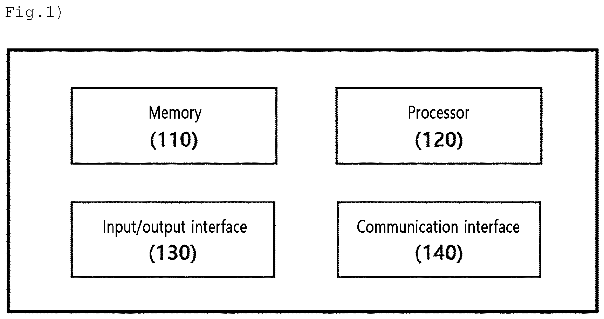

FIG. 1 is a configuration diagram of a 3D electrophysiological surface map registration and attribute transfer apparatus 100 (hereinafter, referred to as an 'apparatus 100') according to one embodiment.

Referring to FIG. 1, the apparatus 100 according to one embodiment may include a memory 110, a processor 120, an input/output interface 130, and a communication interface 140.

The memory 110 may store data acquired from an external apparatus or data created by itself. The memory 110 may store instructions that can perform an operation of the processor 120. For example, the memory 110 may store reference map data, target map data, mesh information, vertex coordinate information, spherical coordinate information, UV coordinate information, electrophysiological attribute values, texture data, representative point information, anchor point information, correspondence relationship information between anchor points, an optimal transport-based correspondence matrix, interpolation weight information, final spherical coordinate information, transferred electrophysiological attribute values, and the like.

The processor 120 is a calculation apparatus that controls an overall operation. The processor 120 may execute instructions stored in the memory 110. The operation of the apparatus 100 according to an embodiment of the disclosure may be understood as an operation performed by the processor 120.

The input/output interface 130 may include a hardware interface or software interface that inputs and outputs information.

The communication interface 140 allows information to be transmitted and received through a communication network. To this end, the communication interface 140 may include a wireless communication module or a wired communication module.

The apparatus 100 may be implemented as various types of apparatuses capable of performing calculations through the processor 120 and transmitting and receiving information through a network. For example, the apparatus 100 may be implemented in a form of a server, a computer apparatus, a portable communication apparatus, a smart phone, a portable multimedia apparatus, a laptop, a tablet PC, and the like, but is not limited to those examples.

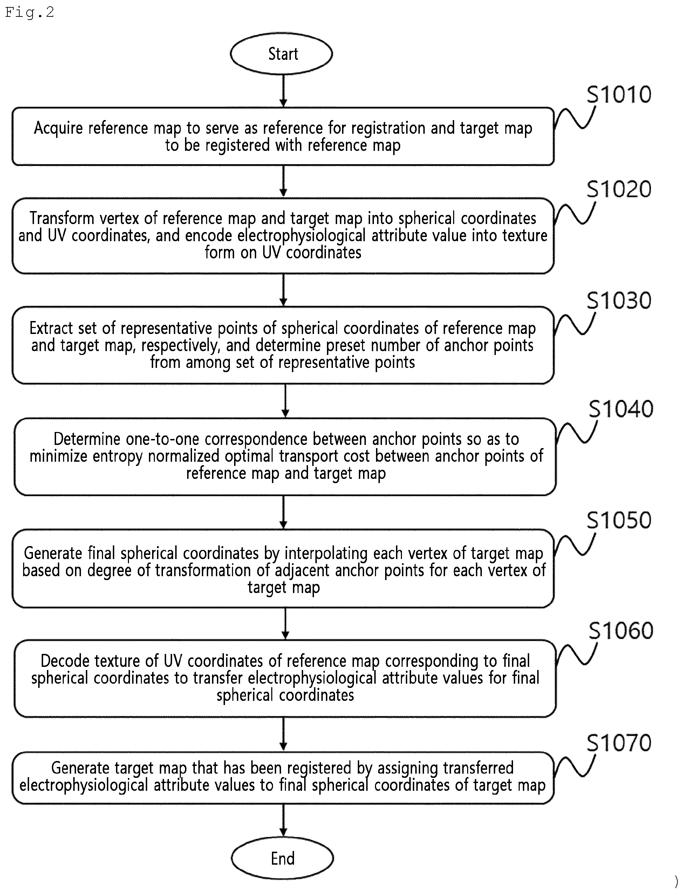

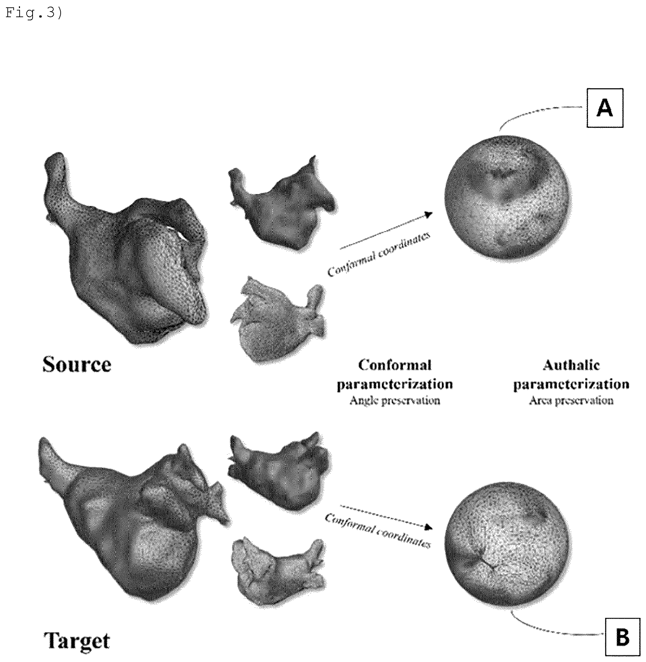

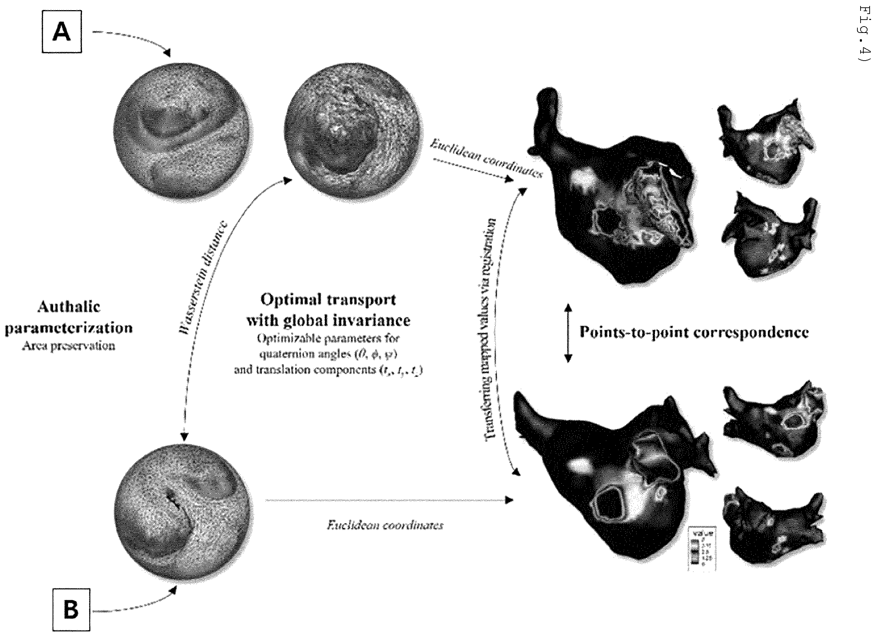

FIG. 2 is a flowchart showing steps performed by the apparatus 100 according to one embodiment. FIGS. 3 and 4 are conceptual diagrams showing a flow of data processed in accordance with the operation of FIG. 2 by the apparatus 100 according to one embodiment. The operation of the apparatus 100 according to an embodiment in FIGS. 2 to 4 may be understood as an operation performed by the processor 120.

Meanwhile, each step disclosed in FIGS. 2 to 4 is only a preferred embodiment in achieving the objectives of the present disclosure, and some steps may be added thereto or deleted therefrom as needed, and any one step may be included in another step to be performed. The order of respective operations disclosed in FIGS. 2 to 4 is only arranged for convenience of understanding, and such an order is not limited to a time series order, and the order may be changed and operated differently depending on the designer's choice.

Referring to FIGS. 2 to 4 together, in step S1010, the apparatus 100 may acquire a reference map to serve as a reference for registration as a surface map including mesh information of a cardiac surface and electrophysiological attribute values corresponding to vertices of the mesh information and a target map to be registered with the reference map.

That is, the surface map is 3D data including mesh information representing a shape of a cardiac surface and electrophysiological attribute values measured corresponding to each vertex constituting the mesh, wherein the electrophysiological attribute values are data including biosignals such as voltage and local activation time (LAT).

For example, the surface map may consist of a set of vertices $V = {\left\{{v}_{i}∈{ℝ}^{3}\right\}}_{i = 1}^{N}$, a set of triangular faces *F*, and a set of electrophysiological attribute values $A = {\left\{{a}_{i}\right\}}_{i = 1}^{N}$ corresponding to each vertex, wherein each vertex *vᵢ* represents coordinates in a 3D space, the set of triangular faces *F* defines a connection relationship between vertices to construct a surface shape, and the electrophysiological attribute value *aᵢ* includes electrical active information measured at each vertex position. The surface map may be represented in various file formats such as PLT, PLY, STL, OBJ, and CUV, and each format may consist of a data structure including vertex coordinates, triangular face connection information, and attribute values corresponding to vertices or surfaces. Therefore, the surface map may be understood as data that simultaneously represents the anatomical shape and electrophysiological characteristics of the heart.

The reference map, which is a surface map as a reference for registration among a plurality of surface maps, is a reference surface map to which electrophysiological attribute values are transferred from other surface maps. The target map is a surface map registered with a reference map, wherein the shape information of the target map is transformed to match the shape of the reference map, and the electrophysiological attribute values of the reference map or the target map are reconstructed based on the registered coordinates.

The reason for performing registration between a reference map and a target map in the present disclosure is that there are a difference in shape and coordinate system between surface maps acquired at different time points or environments, making it difficult to directly compare or integrate electrophysiological attribute values even if they are at the same anatomical position, and in order to solve this problem, the shape between surface maps is registered on a common domain, and electrophysiological attribute values are transferred from a position corresponding to the registered coordinates, thereby allowing electrophysiological information between different surface maps to be compared and integrated based on a consistent reference.

Additionally, the apparatus 100 may perform mesh restoration, connection component cleanup, correction of missing regions in the mesh configuration, and normal direction registration on the input surface map. In this case, when a number of vertices of the acquired reference map and target map is excessively large, the apparatus 100 may perform mesh decimation to reduce the number of vertices constituting the mesh information of each of the acquired reference map and target map to a preset target number of vertices within a range of maintaining the surface shape.

In step S1020, the apparatus 100 may transform each vertex of the reference map and the target map into spherical coordinates and UV coordinates, and encode each electrophysiological attribute value of the reference map and the target map into a texture form on the corresponding UV coordinates.

Specifically, the apparatus 100 may normalize each vertex of the reference map and the target map into spherical coordinates on a common spherical domain. For example, the normalization may be performed for each vertex *vᵢ* based on the surface center *v* as shown in Equation 1 below. [Equation 1] ${\overline{v}}_{i} = \frac{{v}_{i} - v}{\left‖{v}_{i}-v\right‖}$

Here, *v̅ᵢ* represents a normalized vertex into a unit sphere. For example, the apparatus 100 may transform each vertex into a correspondence on a spherical surface using conformal or authalic sphere mapping.

Additionally, the apparatus 100 may generate UV coordinates corresponding to normalized spherical coordinates. For example, the apparatus 100 may compute the UV coordinates from the normalized spherical coordinates *v̅* = (*xᵢ*,*yᵢ*,*zᵢ*) through Equation 2 below. [Equation 2] ${θ}_{i} = atan 2 \left({z}_{i}, {x}_{i}\right) , {ϕ}_{i} = arcsin \left({y}_{i}\right) , {u}_{i} = \frac{{θ}_{i} + π}{2 π} , {v}_{i} = \frac{{ϕ}_{i} + π / 2}{π}$

The transformed UV coordinates are defined on a plane in a range of [0,1]², allowing different surface maps to be compared on the same spherical domain and UV domain.

Accordingly, the apparatus 100 may normalize electrophysiological attribute values included in the vertices of the mesh information of the reference map and the target map, respectively, and encode the normalized electrophysiological attribute values in the form of a texture on the UV coordinates corresponding to the vertices of the reference map and the target map, respectively.

As an example, the electrophysiological attribute value *aᵢ* of each vertex may be normalized as shown in Equation 3 below using a minimum value *aₘᵢₙ* and a maximum value *aₘₐₓ.* [Equation 3] ${\overline{a}}_{i} = clip \left(\frac{{a}_{i} - {a}_{min}}{{a}_{max} - {a}_{min}}, 0, 1\right)$

The normalized value *a̅ᵢ* may be mapped to a 24-bit RGB space, for which an integer value *sᵢ* may first be defined as ${s}_{i} = \left⌊{\overline{a}}_{i}\left({2}^{24}-1\right)\right⌋$ . In this case, the integer value may be decomposed into RGB channels and expressed as *Rᵢ* = (*sᵢ* >> 16)&255,*Gᵢ* = (*sᵢ* >> 8)&255,*Bᵢ* = *sᵢ*&255.

The texture generated in this way is sampled on UV coordinates after registration, and the sampled RGB values may be decoded back into the original electrophysiological attribute values in step S1060 to be described later. The decoding process may be performed as *sᵢ =* (*Rᵢ* << 16) + (*Gᵢ* << 8) + *Bᵢ,* ${a}_{i} = \frac{{s}_{i}}{{2}^{24} - 1} \left({a}_{max}-{a}_{min}\right) + {a}_{min}$ .

This configuration enables stable sampling and attribute transfer even after registration by representing electrophysiological attribute values as a continuous texture field on the UV domain, rather than simply mapping them in units of vertices.

In step S1030, the apparatus 100 may extract a set of representative points consisting of vertices separated by a predetermined distance interval from among the spherical coordinates of the reference map and the target map, respectively, and determine a preset number of anchor points based on a method of selecting a mutual distance from each other to be maximized from among the set of representative points.

In step S1030, the reason for distinguishing between representative points and anchor points is to uniformly reflect a spatial distribution of the entire surface through representative points, while selecting only key points with sufficient spacing from each other as anchor points, thereby reducing the computational complexity of the registration process and forming a stable correspondence relationship. That is, representative points serve as a set of candidates, while anchor points function as key reference points used for actual registration, thereby allowing registration accuracy and computational efficiency to be simultaneously secured.

As an example, the apparatus 100 may extract a vertex corresponding to coordinates separated by a preset distance interval from among the spherical coordinates included in the reference map and the target map, respectively, as a representative point based on a Poisson disk sampling technique. The Poisson disk sampling technique, which is a sampling method that sequentially selects points to satisfy a minimum distance condition between each sample point selected on a surface, is a technique that generates a set of samples uniformly distributed over the entire surface by adopting only candidate points that are a predetermined distance or more away from the already selected sample point as new samples. In this case, the extracted representative points are selected to have a uniform spatial distribution on the surface, and a set of representative points may be expressed as $P = {\left\{{p}_{k}\right\}}_{k = 1}^{K}$*.*

Here, each representative point ***pₖ*** may be defined as a point reflecting regional characteristics based on a set of adjacent vertices **Ω*ₖ*** rather than a single vertex, and that representative point may include shape information such as average electrophysiological attributes, curvature, and normal vector. For example, the electrophysiological attribute value corresponding to the representative point may be computed as an average ${a}_{k} = \frac{1}{\left|{Ω}_{k}\right|} {\sum }_{{v}_{i} ∈ {Ω}_{k}} {a}_{i}$ for an adjacent set of vertices as shown in Equation below. In addition, the geometric characteristics of the representative point may be defined as ${K}_{k} = \frac{1}{\left|{Ω}_{k}\right|} {\sum }_{{v}_{i} ∈ {Ω}_{k}} K \left({v}_{i}\right)$ using curvature information within the adjacent region. The representative points extracted by this method are not concentrated in specific regions but are evenly distributed across the surface, which is advantageous for forming a stable correspondence relationship during a subsequent registration process.

In addition, the apparatus 100 may align the target map by performing a scale transformation, rotation transformation, or translation transformation based on the reference map to eliminate global positional differences between the reference map and the target map, along with a process of extracting a set of representative points.

For example, the apparatus 100 may perform Procrustes alignment including scale transformation, rotation transformation and translation transformation so as to allow an error between representative points of the reference map and the target map to be minimized based on an objective function of Equation 1 below. [Equation 4] ${min}_{s , R , t} {\sum }_{i = 1}^{N} {\left‖{y}_{i}-\left({sRx}_{i}+t\right)\right‖}_{2}^{2}$

**(*s*:** scale transformation, ***R*:** rotation transformation, ***t*:** translation transformation, ***xᵢ:*** a representative point of a target map, ***yᵢ*:** a representative point of a reference map, N is a number of representative points, i is an index specifying representative points)

The Procrustes alignment, which is an alignment technique that minimizes a distance error between corresponding points by applying scaling, rotation, and translation transformations to one set of points to match the shapes between two sets of points as similar as possible, is a method of estimating optimal transformation parameters so as to allow a sum of squares of the Euclidean distances between each representative point to be minimized as shown above in Equation 4. Through the Procrustes alignment, global positional, directional, and size differences between the reference map and the target map may be corrected, and utilized as an initial alignment step so as to allow a subsequent anchor-based response and optimal transport process to converge more stably.

After extracting representative points, for example, the apparatus 100 may extract a preset number of anchor points by sequentially selecting a mutual distance from each other to be maximized from among the set of representative points extracted from the reference map and the target map, respectively, based on a farthest point sampling technique.

For example, the apparatus 100 may extract a set of anchor points $A = {\left\{{a}_{m}\right\}}_{m = 1}^{M} , {A}_{m - 1} = \left\{{a}_{1},…,{a}_{m - 1}\right\}$ based on Equation 5 below by selecting an m-th anchor point, which is a vertex farthest from a previously selected set of anchor points *A*_{*m*-1}. [Equation 5] ${a}_{m} = arg {max}_{v ∈ V} {min}_{a ∈ {A}_{m - 1}} {\left‖v-a\right‖}_{2}$

Here, *V* represents a set of representative points, and after computing a minimum distance value to the anchor points already selected for each candidate vertex *v*, a vertex at which the value is maximized is selected as a new anchor point. This method ensures that anchor points are evenly distributed on the spherical domain by repeatedly selecting a vertex farthest from the existing anchor points. As a result, a representative correspondence may be efficiently selected without performing a full vertex-based registration with a large amount of computation, and stable registration performance may be secured in a subsequent optimal transport-based correspondence process.

In step S1040, the apparatus 100 may determine a one-to-one correspondence between anchor points of the reference map and the target map by registering the target map with the reference map so as to minimize an entropy normalized optimal transport cost between anchor points of the reference map and the target map.

As an example, the apparatus 100 may register the target map with the reference map so as to minimize an entropy normalized optimal transport cost between anchor points of the reference map and the target map so as to calculate a correspondence relationship between sets of anchor points of the reference map and the target map.

For example, a registration between the anchor point of the target map and the anchor point of the reference map may be performed by minimizing an entropy normalized optimal transport cost, and in this case, an entropy normalized optimal transport cost function may be defined as shown in Equation 6 below. [Equation 6] ${L}_{OT} = {min}_{P ∈ Π} {\sum }_{i , j} {P}_{ij} c \left({\hat{x}}_{i}, {y}_{j}\right) + ε {\sum }_{i , j} {P}_{ij} log {P}_{ij}$

(*x̂ᵢ*: an i-th anchor point of a transformed target map, *yⱼ*: a j-th anchor point of a reference map, *c*(*x̂ᵢ,yⱼ*): a distance loss between two anchor points, *Pᵢⱼ*: a value representing a degree of correspondence between an anchor point *x̂ᵢ* of a target map and an anchor point *yⱼ* of a reference map, *P*: a matrix representing a correspondence relationship between anchor points of a reference map and a target map, Π: Equation 3 below as a set of possible *P*, *ε* is an entropy normalized strength)

In Equation 6, Π, which a set of possible translation matrices, satisfies the constraints shown in Equation 7 below. [Equation 7] $Π = \left\{P∈{ℝ}_{+}^{M \times M}\left|{\sum }_{j} {P}_{ij} = \frac{1}{M} , {\sum }_{i} {P}_{ij} = \frac{1}{M}\right.\right\}$

(*P*: a matrix representing a correspondence relationship between anchor points of a reference map and a target map, Π: a set of possible *P, Pᵢⱼ*: a value representing a degree of correspondence between an anchor point *x̂ᵢ* of a target map and an anchor point *yⱼ* of a reference map, M is a number of anchor points in a reference map and a target map, respectively)

In this case, the rotation of the anchor point of the target map is expressed as a quaternion *q =* (*q_{w},qₓ,q_{y},q_{z}*), and the normalized quaternion may be defined as $\hat{q} = \frac{q}{{\left‖q\right‖}_{2}}$*.* In addition, a rotation matrix *R*(*q*) is derived from the quaternion, and the anchor point *xᵢ* of the target map may be transformed as ${x}_{i}^{′} = R \left(q\right) {x}_{i} + t$*.* In addition, the transformed anchor point may be renormalized as ${\hat{x}}_{i} = \frac{{x}_{i}^{′}}{{\left‖{x}_{i}^{′}\right‖}_{2}}$ so as to be maintained on the sphere.

Accordingly, the final objective function may be defined as shown in Equation 8 below. [Equation 8] ${L}_{total} = {L}_{OT} + {λL}_{reg}$

According to Equation 8, *L_{OT}* enforces distribution matching between the reference anchor and the target anchor, *L_{OT}* suppresses excessive deformation as a weighting adjustment coefficient, and *L_{reg}* acts as a regulatory term to prevent the anchor point from leaving the sphere. Accordingly, the apparatus 100 minimizes the objective function of Equation 8, leading to a next one-to-one correspondence determination operation such that a distribution between anchor points of the reference map and the target map is registered to derive a correspondence relationship.

Accordingly, the apparatus 100 may determine a one-to-one correspondence between anchor points of the reference map and the target map by performing allocation optimization after registration based on a preceding entropy normalized optimal transport cost so as to allow a distance cost between anchor points of the reference map and the target map to be minimized.

Accordingly, the apparatus 100 may determine a one-to-one correspondence between anchor points of the reference map and the target map by performing allocation optimization after registration based on a preceding entropy normalized optimal transport cost so as to allow a distance cost between anchor points of the reference map and the target map to be minimized. Specifically, a distance cost between anchor points may be defined as shown in Equation 9 below. [Equation 9] ${C}_{ij} = {\left‖{\hat{x}}_{i}-{y}_{j}\right‖}_{2}$

(Cᵢⱼ: a distance cost between anchor points, *x̂ᵢ*: an i-th anchor point of a transformed target map, *yⱼ*: a j-th anchor point of a reference map)

An optimal one-to-one correspondence may be defined based on a cost matrix of Equation 9 as shown in Equation 10 below. [Equation 10] ${min}_{Π ∈ P} {\sum }_{i , j} {Π}_{ij} {C}_{ij}$

(*P*: a matrix representing a correspondence relationship between anchor points of a reference map and a target map, Π: a set of possible *P*, Π*ᵢⱼ*: an element representing whether there is a correspondence between an i-th anchor point of a target map and a j-th anchor point of a reference map, *Cᵢⱼ*: a distance cost between anchor points)

According to Equation 10, Π is a permutation matrix having only one correspondence for each row and column, and the apparatus 100 may determine a one-to-one correspondence between each anchor point by obtaining a Π that satisfies the optimization problem. This process prevents duplicate correspondence in which a plurality of anchor points correspond to the same reference point, and contributes to ensuring the consistency and stability of the registration result.

In step S1050, the apparatus 100 may generate final spherical coordinates of the target map by interpolating the coordinates for each vertex of the target map based on a degree of transformation by the registration of a preset number of adjacent anchor points for each vertex of the target map.

As an example, the apparatus 100 may interpolate the coordinates of each vertex of the target map in an inverse distance weighting manner based on a degree of transformation by the registration of k neighboring anchor points adjacent to any vertex z of the target map through Equation 11 below. [Equation 11] ${{Z}^{˜}}^{∗} = \frac{{\sum }_{m = 1}^{k} {w}_{m} \left(z\right) {a}_{m}^{∗}}{{\left‖{\sum }_{m = 1}^{k} {w}_{m} \left(z\right) {a}_{m}^{∗}\right‖}_{2}}$

(*z̃**: vertex coordinates of an interpolated target map, *z*: vertex coordinates of a target map before interpolation, k: k adjacent neighboring anchor points for vertex z, m: an index specifying neighboring anchor points, ${a}_{m}^{∗}$: coordinates of neighboring anchor points where registration is performed, wₘ(*z*): Equation 12 below as a function of determining the influence of an m-th neighboring anchor point to be reflected in vertex z) [Equation 12] ${w}_{m} \left(z\right) = \frac{1 / max \left({d}_{m}\left(z\right),ϵ\right)}{{\sum }_{n = 1}^{k} 1 / max \left({d}_{n}\left(z\right),ϵ\right)}$

(wₘ(*z*): a function of determining the influence of an m-th neighboring anchor point to be reflected in vertex z, *dₘ*(*z*): a distance between vertex z and an m-th neighboring anchor point, *dₙ*(*z*): a distance between vertex z and an n-th neighboring anchor point, *ε*: a real number of a preset value, k: k adjacent neighboring anchor points for vertex z, m: an index specifying an m-th neighboring anchor point, n: an index specifying the remaining neighboring anchor points excluding an m-th neighboring anchor point)

Through this interpolation process, a correspondence relationship between a small number of anchor points is extended to a correspondence relationship for all vertices, thereby allowing continuous and stable deformation on the spherical domain.

In step S1060, the apparatus 100 may sample and then decode the encoded texture at a position of the UV coordinates of the reference map corresponding to the final spherical coordinates to transfer electrophysiological attribute values for the final spherical coordinates.

Specifically, the apparatus 100 may transform the final spherical coordinates into UV coordinates, then sample values from a texture of the reference map at a position of the corresponding UV coordinates, and decode the sampled RGB values to transform them into electrophysiological attribute values.

For example, when transferring attributes from the reference map to the target map, the electrophysiological attribute values may be defined as shown in Equation 13 below. [Equation 13] ${a}_{i}^{t ← r} = DecodeRGB \left({T}^{\left(r\right)}\left({u}_{i}^{∗}, {v}_{i}^{∗}\right)\right)$

( ${a}_{i}^{t ← r}$: an electrophysiological attribute value of an i-th vertex transferred from a reference map to a target map, *DecodeRGB*: a function of restoring RGB information of a texture into electrophysiological attribute values, $\left({u}_{i}^{∗}, {v}_{i}^{∗}\right)$: is UV coordinates of a reference map corresponding to final spherical coordinates for an i-th vertex, *T*^{(*r*)}: texture information encoded in UV coordinates $\left({u}_{i}^{∗}, {v}_{i}^{∗}\right)$ of a reference map)

In this way, attribute transfer from the reference map to the target map may be performed, and reverse transfer from the target map to the reference map may also be performed in the same manner.

In step S1070, the apparatus 100 may generate a target map that has been registered by assigning the transferred electrophysiological attribute values to the final spherical coordinates of the target map.

Additionally, the apparatus 100 may generate an integrated map by outputting the registered result as a new surface map or accumulating or averaging electrophysiological attribute values transferred from a plurality of target surface maps onto a single reference surface map.

As an example, when electrophysiological attribute value vectors transferred from a plurality of surface maps to the reference surface map are *f*⁽¹⁾*,f*⁽²⁾*,...,f*^{(*L*)}*,* the apparatus 100 may generate an integrated attribute value obtained by accumulating a plurality of electrophysiological attribute value vectors transferred to a reference map from a plurality of target maps that have been registered based on Equation 14 below. [Equation 14] ${f}^{i} = {\sum }_{l = 1}^{L} {{f}_{i}}^{\left(l\right)}$

(*fⁱ*: an integrated attribute value, ${{f}_{i}}^{\left(l\right)}$: an electrophysiological attribute value of an i-th vertex transferred from an l-th target map, *L*: a number of target maps to be integrated, l: an index specifying a target map)

The integrated attribute values generated in this way may be expressed by integrating electrophysiological information acquired from multiple time points or multiple patients on a single reference coordinate system, thereby generating an electrophysiological map capable of statistical or comparative analysis.

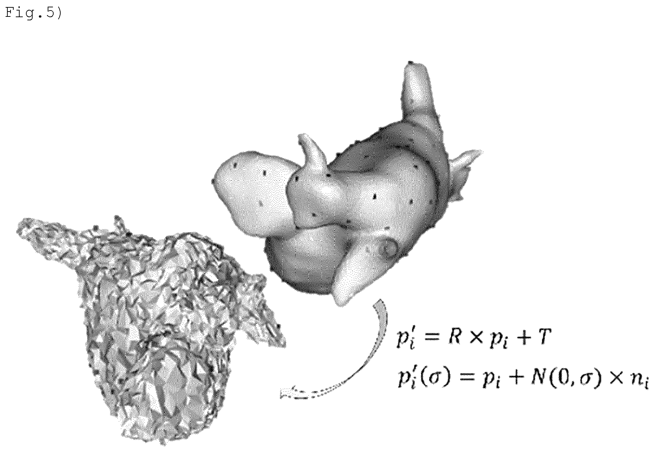

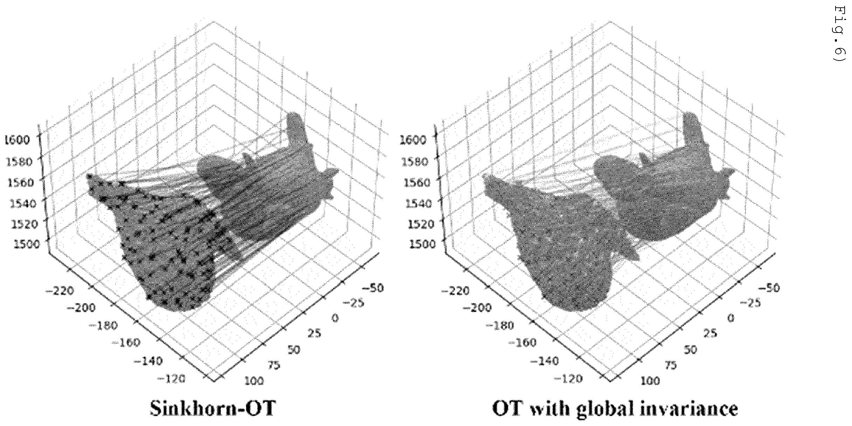

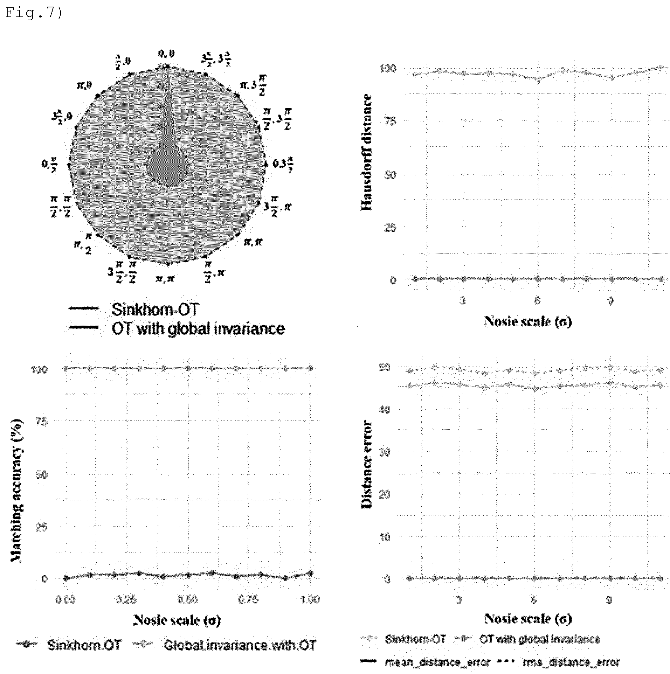

FIGS. 5 to 7 are results of evaluating a registration between a reference map and a target map, which has been registered by applying the present disclosure in terms of two aspects, a shape error and an attribute restoration error.

Referring to FIGS. 5 to 7, attribute transfer performance was evaluated by using a mean absolute error (MAE), a root mean squared error (RMSE), a max absolute error, and a correlation coefficient, and an affine-based registration result using 8 landmarks was used as a comparison group. In this experiment, an evaluation dataset was generated by applying random Gaussian to a reference map. According to FIGS. 5 to 7, it can be seen that the technique of the present disclosure successfully reconstructs a point-to-point correspondence between a reference surface and an evaluation surface across all predefined transformations including pitch and yaw rotations (0, π/2, π, 3π/2 along each axis). In addition, it can be seen that the technique of the present disclosure exhibits excellent performance while maintaining high alignment accuracy even when Gaussian noise is added to the reference surface.

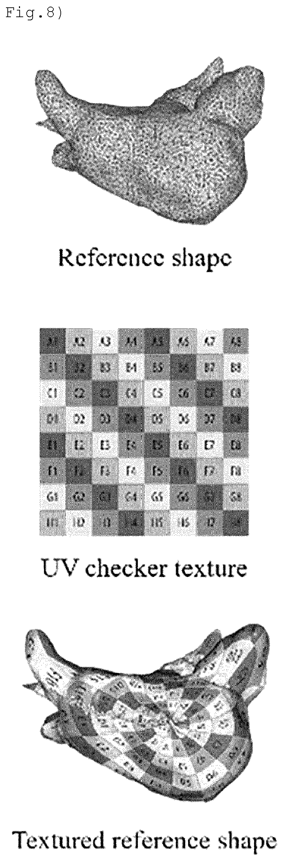

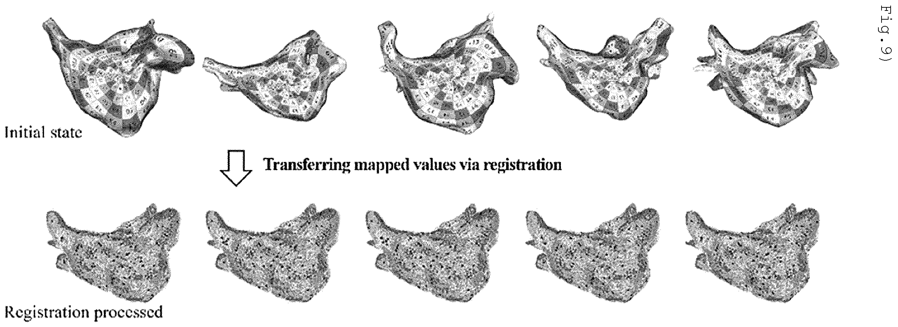

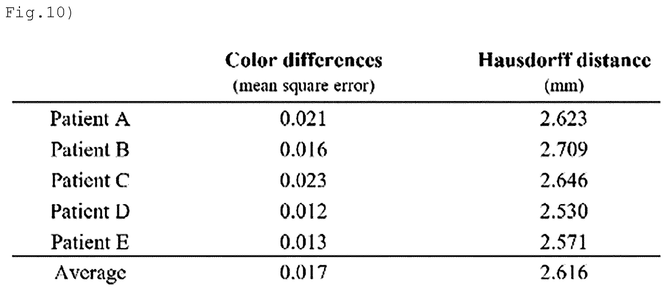

FIGS. 8 to 10 are results of evaluating a registration between a reference map and a target map, which has been registered by applying the present disclosure, based on attribute transfer performance.

Referring to FIGS. 8 to 10, registration accuracy was compared for various conditions with pitch and yaw rotation conditions and a scale σ representing a magnitude of noise varying from 0 to 1 in a controlled environment containing a predefined transformation and Gaussian noise. In this case, through a point-to-point correspondence experiment, a mean squared error for a color difference of a UV checker texture was found to be 0.0171, and an average Hausdorff distance was confirmed to be 2.616 mm. According to those results, it can be seen that the present disclosure stably performs registration even under various rotation conditions and noise environments, and can precisely maintain a correspondence relationship between a reference map and a target map.

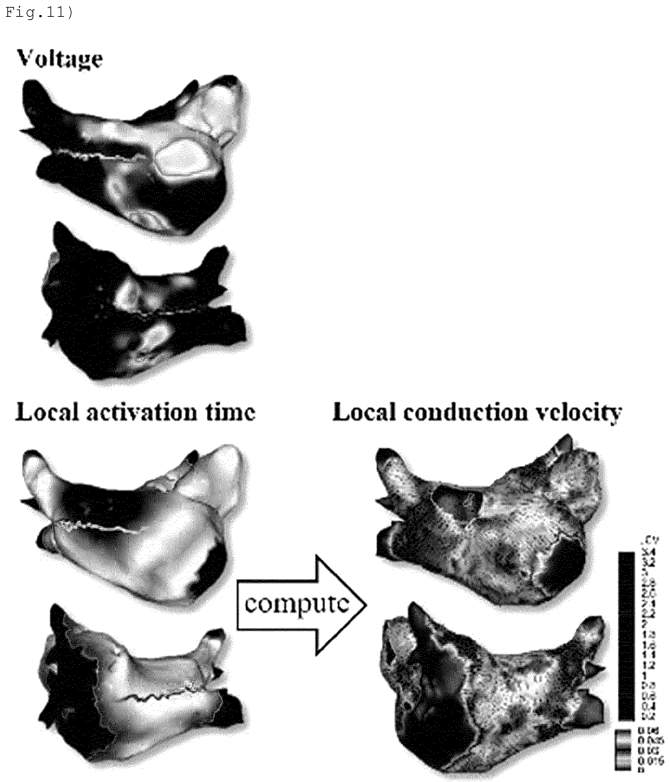

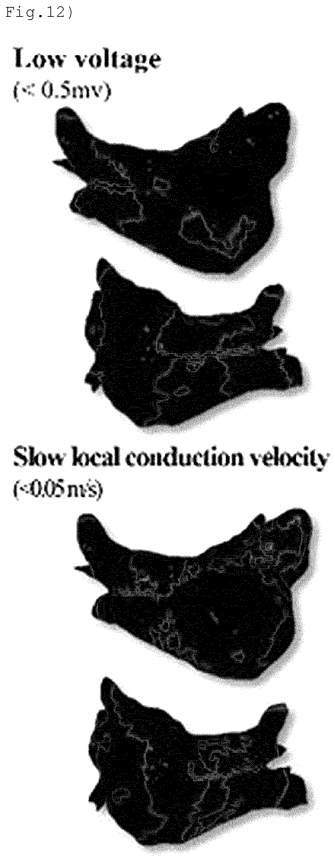

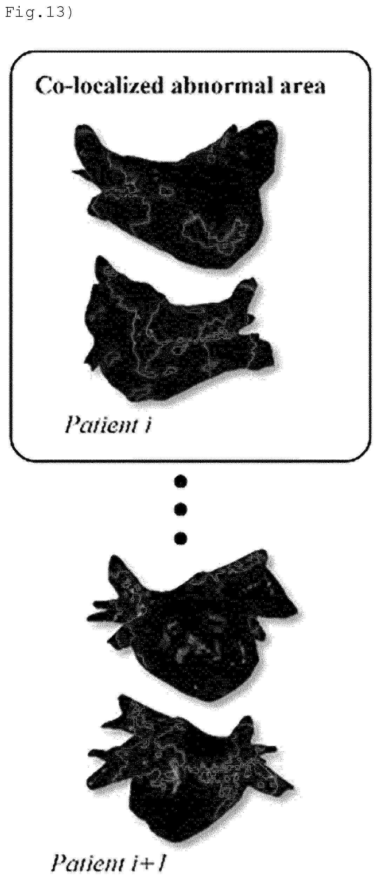

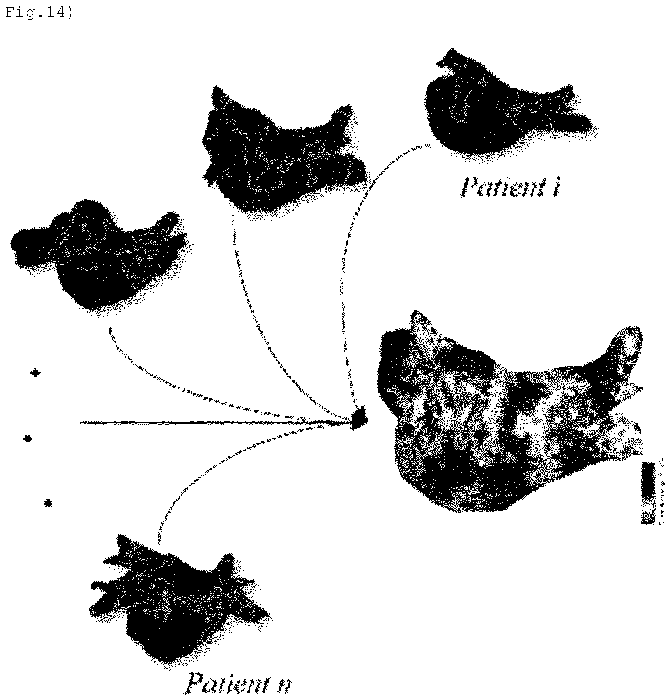

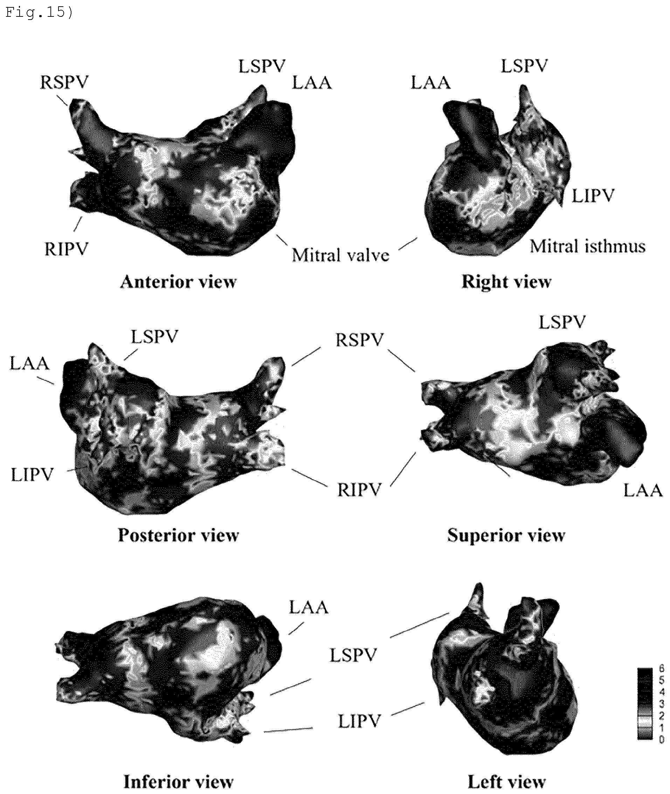

FIGS. 11 to 15 are drawings showing results of electrophysiological attribute transfer using arrhythmia patient data to which the present disclosure is applied.

Referring to FIGS. 11 to 15, high-resolution voltage and conduction velocity data were acquired from the left atrium LA of actual arrhythmia patients (n=6) through invasive electrophysiological testing. For each patient, a low voltage region (< 0.5 mV) and a slow local conduction velocity region (< 0.05 m/s) were pre-extracted according to clinical criteria. Subsequently, the low voltage and low conduction regions extracted from each patient were mapped to a reference left atrial shape, and regions exhibiting both voltage and conduction abnormalities simultaneously were identified. In addition, individual patients' left atrial shapes and corresponding regions were registered with a standardized reference left atrial shape, and then a heatmap was generated by integrating the results of all patients. As a result, regions with low voltage (<0.5 mV) and low conduction velocity (<0.05 m/s) occurring simultaneously were consistently identified around the pulmonary vein (PV) and the mitral valve isthmus, and it can be seen that these regions correspond well to clinically known lesion positions. These results suggest that the present disclosure can generate a spherical-anchor-optimal-transport-based registration structure capable of automatically generating a correspondence without landmarks.

According to the foregoing embodiment, registration may be performed by using anchor-based optimal transport after normalizing a 3D electrophysiological surface map into a common spherical domain, thereby forming a stable and consistent correspondence relationship between surfaces having different shapes and resolutions. Accordingly, a problem of unstable registration caused by local deformation or differences in mesh quality, as in the past, may be alleviated, and all vertex correspondences may be extended based on a small number of representative anchors, thereby securing global shape registration accuracy while maintaining computational efficiency.

In addition, through a structure that encodes surface attribute values into a texture form and restores them at corresponding coordinates, it reduces distortion or discontinuity that can occur during the attribute transfer process, thereby having an effect of enabling the preservation of continuous attributes. Furthermore, attribute information acquired from a plurality of surface maps may be integrated onto a single reference surface to provide a foundation for quantitatively comparing and analyzing electrophysiological information between various time points or objects, and an overall automated registration and attribute integration pipeline may be implemented, thereby having an effect of simultaneously improving analysis efficiency and reliability.

It should be understood that various embodiments of the disclosure and terms used herein are not intended to limit the technical features described in the disclosure to specific embodiments, and include various modifications, equivalents, or alternatives of the embodiments. With regard to the description of the drawings, similar reference numerals may be used for similar or related elements. A singular form of a noun corresponding to an item may include one or more of the things, unless the relevant context clearly indicates otherwise.

In the disclosure, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st", "2nd", or "first" and "second" may be used merely to differentiate a corresponding element from another, and do not limit the elements in any other aspect (e.g., importance or order). When an element (e.g., a first element) is referred to as being "coupled" or "connected" to another element (e.g., a second element), with or without the term "functionally" or "communicatively," it means that the element may be connected to the other element directly (e.g., in a wired manner), in a wireless manner, or through a third element.

The term "module" as used in the disclosure may include a unit implemented in hardware, software or firmware, and may be used interchangeably with terms such as logic, logic block, component, or circuit. A module may be an integrally configured component or a minimum unit of the component that performs one or more functions or a part thereof. For example, according to one embodiment, the module may be implemented in a form of an application-specific integrated circuit (ASIC).

Various embodiments of the disclosure may be implemented as software (e.g., a program) including one or more instructions stored in a storage medium (e.g., a memory) that is readable by an apparatus (e.g., an electronic apparatus). The storage medium may include a random access memory (RAM), a memory buffer, a hard drive, a database, an erasable programmable read-only memory (EPROM), an electrically erasable read-only memory (EEPROM), a read-only memory (ROM), and/or the like.

In addition, a processor in embodiments of the disclosure may retrieve at least one instruction from among one or more instructions stored from a storage medium and execute the retrieved instruction. This allows the device to operate to perform at least one function according to the retrieved at least one instruction. The one or more instructions may include a code created by a compiler or a code executable by an interpreter. The processor may be a general purpose processor, a field programmable gate array (FPGA), an application specific integrated circuit (ASIC), a digital signal processor (DSP), and/or the like.

The device-readable storage medium may be provided in a form of a non-transitory storage medium. Here, the term 'non-transitory' simply means that the storage medium is a tangible apparatus and does not include a signal (e.g. electromagnetic waves), and this term does not differentiate between a case where data is stored semi-permanently and a case where the data is temporarily on the storage medium.

A method according to various embodiments disclosed in the disclosure may be included and provided in a computer program product. The computer program product may be traded as a commodity between a seller and a buyer. The computer program product may be distributed in a form of an apparatus-readable storage medium (e.g., compact disc read only memory (CD-ROM)), or be distributed (e.g., downloaded or uploaded) online via an application store (e.g., PlayStore) or directly between two user apparatuses (e.g., smartphones). In the case of online distribution, at least part of the computer program product may be at least temporarily stored or temporarily created in the device-readable storage medium, such as a manufacturer's server, a server of an application store, or a server's memory.

According to various embodiments, each element (e.g., a module or a program) of the above-described elements may include a single entity or a plurality of entities. According to various embodiments, one or more of the aforementioned elements or operations may be omitted, or one or more other elements or operations may be added. Alternatively or additionally, the plurality of elements (e.g., modules or programs) may be integrated into a single element. In such a case, the integrated element may perform one or more functions of each of the plurality of elements in the same or similar manner to those performed by a corresponding one of the plurality of elements prior to the integration. According to various embodiments, operations performed by a module, a program or another element may be executed sequentially, in parallel, repeatedly, or heuristically, or one or more of the operations may be executed in a different order, omitted, or one or more other operations may be added.

### DESCRIPTION OF SYMBOLS

100: Apparatus
110: Memory
120: Processor
130: Input/output interface
140: Communication interface

## Claims

1. A method of performing 3D electrophysiological surface map registration and attribute transfer operated by a processor, the method comprising the operations of:
acquiring a reference map to serve as a reference for registration as a surface map including mesh information of a cardiac surface and electrophysiological attribute values corresponding to vertices of the mesh information and a target map to be registered with the reference map;
transforming each vertex of the reference map and the target map into spherical coordinates and UV coordinates, and encoding the electrophysiological attribute values in the form of a texture on the UV coordinates corresponding thereto;
extracting a set of representative points consisting of vertices separated by a predetermined distance interval from among the spherical coordinates of the reference map and the target map, respectively, and determining a preset number of anchor points based on a method of selecting a mutual distance from each other to be maximized from among the set of representative points;
determining a one-to-one correspondence between anchor points of the reference map and the target map by registering the target map with the reference map so as to allow an entropy normalized optimal transport cost between the anchor points of the reference map and the target map to be minimized;
generating final spherical coordinates of the target map by interpolating the coordinates for each vertex of the target map based on a degree of transformation by the registration of a predetermined number of adjacent anchor points for each vertex of the target map;
sampling and then decoding the encoded texture at a position of the UV coordinates of the reference map corresponding to the final spherical coordinates to transfer electrophysiological attribute values for the final spherical coordinates; and
generating a target map that has been registered by assigning the transferred electrophysiological attribute values to the final spherical coordinates of the target map.

2. The method of claim 1, wherein the acquiring comprises:
a preprocessing operation that performs mesh decimation to reduce a number of vertices constituting mesh information of each of the acquired reference map and target map to a preset target number of vertices.

3. The method of claim 1, wherein the encoding comprises:
normalizing each vertex of the reference map and the target map into spherical coordinates on a common spherical domain, and generating UV coordinates corresponding to the normalized spherical coordinates; and
normalizing the electrophysiological attribute values to encode the normalized electrophysiological attribute values in the form of a texture on UV coordinates corresponding to the vertices of the reference map and the target map, respectively.

4. The method of claim 1, wherein the extracting of a set of representative points comprises:
extracting a vertex corresponding to coordinates separated by a predetermined distance interval from among the spherical coordinates included in the reference map and the target map, respectively, as the representative point based on a Poisson disk sampling technique.

5. The method of claim 1, wherein the extracting of a set of representative points comprises:
aligning the target map by performing a scale transformation, rotation transformation, or translation transformation based on the reference map to eliminate global positional differences between the reference map and the target map.

6. The method of claim 5, wherein the aligning comprises:
performing Procrustes alignment including scale transformation, rotation transformation, and translation transformation so as to allow an error between representative points of the reference map and the target map to be minimized based on an objective function of Equation 1 below. [Equation 1] ${min}_{s , R , t} {\sum }_{i = 1}^{N} {\left‖{y}_{i}-\left({sRx}_{i}+t\right)\right‖}_{2}^{2}$
(*s*: scale transformation, *R*: rotation transformation, *t:* translation transformation, *xᵢ*: a representative point of a target map, *yᵢ*: a representative point of a reference map, N is a number of representative points, i is an index specifying representative points)

7. The method of claim 1, wherein the extracting of anchor points comprises:
extracting a preset number of anchor points by sequentially selecting a mutual distance from each other to be maximized from among a set of representative points extracted from the reference map and the target map, respectively, based on a farthest point sampling technique.

8. The method of claim 1, wherein the determining of a one-to-one correspondence comprises:
registering the target map with the reference map to allow an entropy normalized optimal transport cost between the anchor points of the reference map and the target map to be minimized so as to calculate a correspondence relationship between sets of anchor points of the reference map and the target map; and
determining, subsequent to the registration, a one-to-one correspondence between anchor points of the reference map and the target map by performing allocation optimization so as to allow a distance cost between anchor points of the reference map and the target map to be minimized.

9. The method of claim 8, wherein the entropy normalized optimal transport cost is set based on Equations 2 and 3 below. [Equation 2] ${min}_{P ∈ Π} {\sum }_{i , j} {P}_{ij} c \left(\hat{{x}_{i}}, {y}_{j}\right) + ϵ {\sum }_{i , j} {P}_{ij} {logP}_{ij}$
(*x̂ᵢ*: an i-th anchor point of a transformed target map, *yⱼ*: a j-th anchor point of a reference map, *C*(*x̂ᵢ, yⱼ*): a distance loss between two anchor points, *Pᵢⱼ*: a value representing a degree of correspondence between an anchor point *x̂ᵢ* of a target map and an anchor point *yⱼ* of a reference map, *P*: a matrix representing a correspondence relationship between anchor points of a reference map and a target map, Π: Equation 3 below as a set of possible *P*, *ε* is an entropy normalized strength) [Equation 3] $Π = \left\{P∈{ℝ}_{+}^{M \times M}\left|{\sum }_{i} {P}_{ij} = \frac{1}{M} , {\sum }_{i} {P}_{ij} = \frac{1}{M}\right.\right.$
(*P*: a matrix representing a correspondence relationship between anchor points of a reference map and a target map, Π: a set of possible *P, Pᵢⱼ*: a value representing a degree of correspondence between an anchor point *x̂ᵢ* of a target map and an anchor point *yⱼ* of a reference map, M is a number of anchor points in a reference map and a target map, respectively)

10. The method of claim 9, wherein the allocation optimization is performed by determining a one-to-one correspondence between anchor points of the reference map and the target map that is minimized based on Equation 4 below. [Equation 4] ${min}_{Π ∈ P} {\sum }_{i , j} {Π}_{ij} {C}_{ij}$
(*P:* a matrix representing a correspondence relationship between anchor points of a reference map and a target map, Π: a set of possible *P*, Π*ᵢⱼ*: an element representing whether there is a correspondence between an i-th anchor point of a target map and a j-th anchor point of a reference map, *Cᵢⱼ*: Equation 5 as a distance cost between anchor points) [Equation 5] ${C}_{ij} = {\left‖\hat{{x}_{i}}-{y}_{j}\right‖}_{2}$
(Cᵢⱼ: a distance cost between anchor points, *x̂ᵢ*: an i-th anchor point of a transformed target map, *yⱼ*: a j-th anchor point of a reference map)

11. The method of claim 1, wherein the generating of final spherical coordinates comprises:
interpolating the coordinates of each vertex of the target map in an inverse distance weighting manner based on a degree of transformation by the registration of k adjacent neighboring anchor points for vertex z of the target map, based on Equation 6 below. [Equation 6] ${{Z}^{˜}}^{∗} = \frac{{\sum }_{m = 1}^{k} {w}_{m} \left(z\right) {a}_{m}^{∗}}{{\left‖{\sum }_{m = 1}^{k} {w}_{m} \left(z\right) {a}_{m}^{∗}\right‖}_{2}}$
(*z̃**: vertex coordinates of an interpolated target map, z: vertex coordinates of a target map before interpolation, k: k adjacent neighboring anchor points for vertex z, m: an index specifying neighboring anchor points, ${a}_{m}^{*}$: coordinates of neighboring anchor points where registration is performed, wₘ(*z*): Equation 7 below as a function of determining the influence of an m-th neighboring anchor point to be reflected in vertex z) [Equation 7] ${w}_{m} \left(z\right) = \frac{1 / max \left({d}_{m}\left(z\right),ϵ\right)}{{\sum }_{n = 1}^{k} 1 / max \left({d}_{n}\left(z\right),ϵ\right)}$
(wₘ(*z*): a function of determining the influence of an m-th neighboring anchor point to be reflected in vertex z, *dₘ*(*z*): a distance between vertex z and an m-th neighboring anchor point, *dₙ*(*z*): a distance between vertex z and an n-th neighboring anchor point, *ε*: a real number of a preset value, k: k adjacent neighboring anchor points for vertex z, m: an index specifying an m-th neighboring anchor point, n: an index specifying the remaining neighboring anchor points excluding an m-th neighboring anchor point)

12. The method of claim 1, wherein the transferring of electrophysiological attribute values comprises:
sampling and then decoding the encoded texture at a position of the UV coordinates of the reference map corresponding to the final spherical coordinates to generate electrophysiological attribute values based on Equation 8 below. [Equation 8] ${a}_{i}^{t ← r} = DecodeRGB \left({T}^{\left(r\right)}\left({u}_{i}^{*}, {v}_{i}^{*}\right)\right)$
( ${a}_{i}^{t ← r}$: an electrophysiological attribute value of an i-th vertex transferred from a reference map to a target map, *DecodeRGB*: a function of restoring RGB information of a texture into electrophysiological attribute values, ( ${u}_{i}^{*} , {v}_{i}^{*}$): is UV coordinates of a reference map corresponding to final spherical coordinates for an i-th vertex, *T*^{(*r*)}: texture information encoded in UV coordinates ( ${u}_{i}^{*} , {v}_{i}^{*}$) of a reference map)

13. The method of claim 1, wherein the generating of a target map that has been registered comprises:
generating an integrated attribute value by accumulating a plurality of electrophysiological attribute value vectors transferred from the plurality of target maps that has been registered to a reference map based on Equation 9 below. [Equation 9] ${f}^{i} = {\sum }_{l = 1}^{L} {f}_{i}^{\left(l\right)}$
( *fⁱ* : an integrated attribute value, ${f}_{i}^{\left(l\right)}$: an electrophysiological attribute value of an i-th vertex transferred from an l-th target map, *L*: a number of target maps to be integrated, l: an index specifying a target map)

14. An apparatus for 3D electrophysiological surface map registration and attribute transfer, the apparatus comprising:
a memory comprising an instruction; and
a processor that performs a predetermined operation based on the instruction,
wherein the operation of the processor comprises the operations of:
acquiring a reference map to serve as a reference for registration as a surface map including mesh information of a cardiac surface and electrophysiological attribute values corresponding to vertices of the mesh information and a target map to be registered with the reference map;
transforming each vertex of the reference map and the target map into spherical coordinates and UV coordinates, and encoding the electrophysiological attribute values in the form of a texture on the UV coordinates corresponding thereto;
extracting a set of representative points consisting of vertices separated by a predetermined distance interval from among the spherical coordinates of the reference map and the target map, respectively, and determining a preset number of anchor points based on a method of selecting a mutual distance from each other to be maximized from among the set of representative points;
determining a one-to-one correspondence between anchor points of the reference map and the target map by registering the target map with the reference map so as to allow an entropy normalized optimal transport cost between the anchor points of the reference map and the target map to be minimized;
generating final spherical coordinates of the target map by interpolating the coordinates for each vertex of the target map based on a degree of transformation by the registration of a predetermined number of adjacent anchor points for each vertex of the target map;
sampling and then decoding the encoded texture at a position of the UV coordinates of the reference map corresponding to the final spherical coordinates to transfer electrophysiological attribute values for the final spherical coordinates; and
generating a target map that has been registered by assigning the transferred electrophysiological attribute values to the final spherical coordinates of the target map.
